Europäisches Patentamt

European Patent Office

Office européen des brevets

(19)

(11) Numéro de publication: **0 232 661**
**B1**

(12) **FASCICULE DE BREVET EUROPEEN**

(45) Date de publication du fascicule du brevet:
28.02.90

(51) Int. Cl.⁴: **H02K 44/06**

(21) Numéro de dépôt: **86402966.5**

(22) Date de dépôt: **30.12.86**

(54) **Pompe électromagnétique pour liquide conducteur à refoulement par répulsion magnétique.**

(30) Priorité: **15.01.86 FR 8600512**

(43) Date de publication de la demande:
**19.08.87 Bulletin 87/34**

(45) Mention de la délivrance du brevet:
**28.02.90 Bulletin 90/9**

(84) Etats contractants désignés:
**DE GB IT**

(56) Documents cités:
**FR-A- 2 196 735**

(73) Titulaire: **NOVATOME, Tour Fiat 1, place de la Coupole, F-92400 - Courbevoie(FR)**

(72) Inventeur: **Gehlkopf, Stéphane, 9, rue Victor Hugo, F-92400 Courbevoie(FR)**
Inventeur: **Lebaud, Patrice, 60, rue Marie Fichet, F-92140 Clamart(FR)**

(74) Mandataire: **Polus, Camille et al, c/o Cabinet Lavoix 2, Place d'Estienne d'Orves, F-75441 Paris Cedex 09(FR)**

## Description

L'invention concerne une pompe électromagnétique pour un liquide conducteur tel qu'un métal liquide, à refoulement par répulsion magnétique.

On connaît des pompes pour des métaux liquides à bas point de fusion tels que le sodium qui comportent un conduit annulaire recevant le métal liquide ainsi qu'un bobinage et un circuit magnétique permettant de créer un champ magnétique et un courant électrique perpendiculaires entre eux dans le métal liquide. On connaît par exemple une pompe comportant un conduit annulaire constitué par deux tubes concentriques entre lesquels circule le métal liquide en cours de pompage, le tube externe du conduit annulaire étant disposé a l'intérieur d'un stator constitué par un circuit magnétique renfermant des bobinages alimentés par un système de courant polyphasé, de façon a créer un champ glissant de direction radiale dans le métal liquide. Un noyau magnétique est également disposé à l'intérieur du tube interne du conduit annulaire pour permettre aux lignes de force du champ magnétique de se refermer en traversant le conduit annulaire.

Les bobines entourant le conduit annulaire et coaxiales à ce conduit créent dans le métal liquide à l'intérieur du conduit annulaire un courant induit circulaire se refermant sur lui-même et circulant dans un sens opposé au courant d'alimentation des bobines. L'action du champ magnétique glissant de direction radiale sur le courant induit produit un effet de pompage du métal liquide dans le conduit annulaire. De telles pompes, bien que théoriquement satisfaisantes, ont une structure complexe et sont d'un coût élevé. En effet, il faut prévoir un circuit magnétique feuilleté comportant de nombreuses encoches successives dans lesquelles sont disposés les bobinages qui sont alimentés par un système de courants polypyhasés, ce qui nécessite des connexions nombreuses et un générateur coûteux. Une pompe electromagnétique connue est decrite dans le fascicule de brevet FR-A 2 196 735.

D'autre part, dans le cas où une bobine est défectueuse, pour son remplacement, il est nécessaire d'arrêter, de vidanger et de démonter complètement la pompe en tronçonnant ses extrémités raccordées sur les tubes du circuit où elle est placée.

Le but de l'invention est donc de proposer une pompe électromagnétique pour un liquide conducteur, à refoulement par répulsion magnétique, comportant un conduit annulaire recevant le liquide conducteur ainsi qu'un bobinage et un circuit magnétique permettant de créer un champ magnétique et un courant électrique dans le liquide conducteur, cette pompe électromagnétique étant d'une structure simple et donc d'un coût peu important, d'un faible encombrement et d'une grande simplicité quant à son montage, son utilisation et son entretien.

Dans ce but :

- le conduit annulaire est fermé à l'une de ses extrémités et communique au voisinage de cette extrémité avec un conduit latéral d'arrivée de liquide conducteur; l'autre extrémité dudit conduit annulaire est ouverte et communique avec un conduit de sortie.

- le bobinage comporte un seul enroulement coaxial au conduit annulaire, adjacent à son extrémité fermée et alimenté en courant alternatif monophasé,
- et le circuit magnétique entoure extérieurement et intérieurement, à la fois le bobinage et le conduit annulaire.

Afin de bien faire comprendre l'invention, on va maintenant décrire, à titre d'exemples non limitatifs, une pompe électromagnétique suivant l'art antérieur et plusieurs modes de réalisation d'une pompe électromagnétique à répulsion suivant l'invention.

Dans ces figures :

- la figure 1 est une vue partielle en perspective éclatée d'une pompe électromagnétique pour métaux liquides suivant l'art antérieur ;
- la figure 2 est une vue en perspective éclatée d'une pompe suivant l'invention et suivant un premier mode de réalisation ;
- la figure 3 est une vue en coupe par un plan vertical de symétrie de la pompe représentée sur la figure 2 ;
- la figure 4 est une vue en coupe suivant IV-IV de la figure 3;
- la figure 5 est une vue en coupe verticale analogue a la figure 3, d'un seconde mode de réalisation d'une pompe électromagnétique suivant l'invention ;
- la figure 6 est une vue en coupe transversale d'une partie du circuit magnétique de la pompe représentée à la figure 4 ou à la figure 5, selon une variante de réalisation.

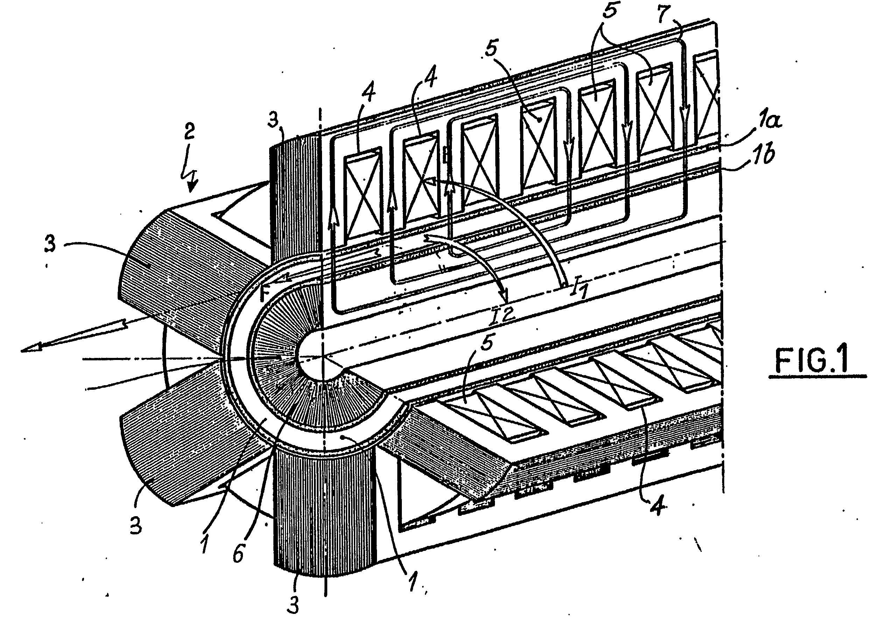

Sur la figure 1, on voit une pompe électromagnétique pour métaux liquides comportant un conduit annulaire 1 constitué de deux tubes concentriques en matériau amagnétique 1a et 1b entre lesquels circule le métal liquide suivant la direction des flèches F.

Le tube extérieur 1a est entouré par un circuit magnétique feuilleté 2 comportant des branches radiales 3 et des encoches successives 4, dans la direction axiale. Dans chacune des encoches 4 est placée une bobine 5 entourant le conduit 1 et coaxiale à ce conduit. Un noyau feuilleté 6 est placé à l'intérieur du tube interne 1b du conduit 1, si bien que les lignes de flux 7 du champ magnétique créé par les bobinages 5 se referment par l'intermédiaire du noyau 6. Les lignes de flux 7 traversent la veine de métal liquide en circulation dans le conduit annulaire 1 suivant des directions radiales. Les bobinages 5 sont alimentés en courant polyphasé, si bien que le champ magnétique traversant la veine de métal liquide est un champ glissant. Des courants induits schématisés par la flèche $I_2$ sont créés dans le métal liquide à l'intérieur du conduit 1. Ces courants induits circulaires se referment sur eux-mêmes et sont coaxiaux aux bobinages 5 et au conduit 1 ; leur sens de circulation est opposée aux courants d'alimentation $I_1$ des bobinages 5 qui leur ont donné naissance.

On voit que la pompe électromagnétique représentée sur la figure 1 et correspondant à l'art antérieur présente une structure complexe, le circuit magnétique étant réalisé par empilage de tôles découpées comportant de nombreux créneaux successifs correspondant aux encoches. Une telle pompe d'autre part nécessite une alimentation complexe polyphasée pour les bobinages.

Dans le cas où l'un des bobinages 5 est défectueux, il est nécessaire d'arrêter totalement la pompe et de procéder à un démontage complet de cette pompe. Le conduit 1 étant intercalé entre deux conduites d'un circuit dans lequel on réalise le pompage du métal liquide, il est nécessaire, après vidange du circuit, de découper ces conduits pour extraire le bobinage défectueux. Pour la remise en route de la pompe, il faut évidemment réaliser à nouveau sa fixation par soudage sur les conduites d'utilisation.

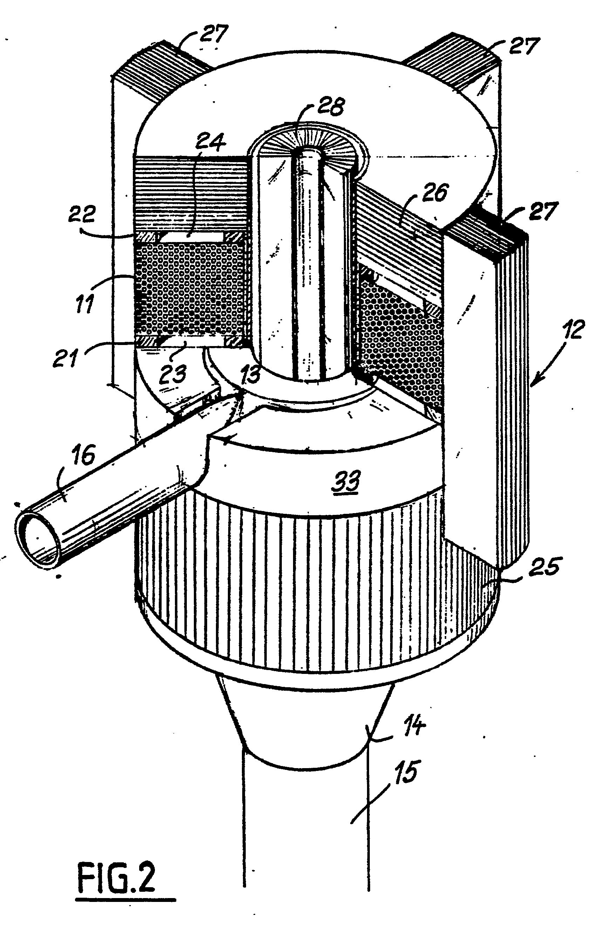

Sur les figures 2, 3 et 4, on voit un mode de réalisation d'une pompe suivant l'invention qui comporte un conduit annulaire 10, une bobine unique 11 et un circuit magnétique 12 entourant le conduit 10 et la bobine 11, intérieurement et extérieurement.

Le conduit annulaire 10 est fermé à son extrémité supérieure par une plaque supérieure annulaire 13 soudée au tube intérieur 10b et au tube extérieur 10a du conduit annulaire 10. Le tube externe 10a est également soudé à sa partie inférieure à une pièce de raccord tronconique 14 permettant de relier le conduit annulaire 10 à un conduit de sortie 15 qui peut faire partie du circuit d'utilisation sur lequel est montée la pompe ou constituer un élément de raccordement de la pompe à ce conduit. A l'extrémité supérieure du tube externe 10a du conduit 10 est également fixé par soudage le conduit 16 d'arrivée latérale du métal liquide dans le conduit 10, de direction radiale par rapport à ce conduit annulaire 10.

Le tube interne 10b du conduit annulaire est fermé à sa partie inférieure par une pièce de fermeture conique 17.

Le conduit 10 est entouré sur toute sa hauteur par une virole 19 de protection thermique ; un disque 20 de protection thermique est également placé au-dessus de la plaque supérieure 13 du conduit 10.

Le bobinage unique circulaire 11 de la pompe vient reposer sur le disque de protection thermique 20 par l'intermédiaire de pièces d'isolation électrique 21. Au-dessus de la bobine 11 sont également disposées des pièces d'isolation électrique 22 séparant la bobine 11 de la partie supérieure du circuit magnétique 12. Les pièces d'isolation 21 et 22 ménagent entre elles des espaces libres 23 et 24 respectivement permettant le passage d'air de refroidissement autour du bobinage 11.

Le circuit magnétique 12 comporte une partie inférieure de forme tubulaire 25, une partie supérieure 26 en forme de disque, des branches verticales 27 joignant les parties inférieure et supérieure du circuit magnétique et une partie tubulaire interne 28 traversant l'alésage interne de la pièce annulaire 26 et de la bobine 11 et logée à sa partie inférieure dans le tube interne 10b du conduit 10.

La partie tubulaire inférieure 25 du circuit magnétique 12 est constituée par des tôles magnétiques 31, 32 disposées à l'intérieur d'une structure de maintien en acier inoxydable 30 elle-même constituée par deux flasques d'extrémité de forme annulaire 30a entretoisés par des tôles soudées 30b et comportant des rebords de maintien des tôles magnétiques et des cerclages soudés 30c assurant le maintien des tôles magnétiques.

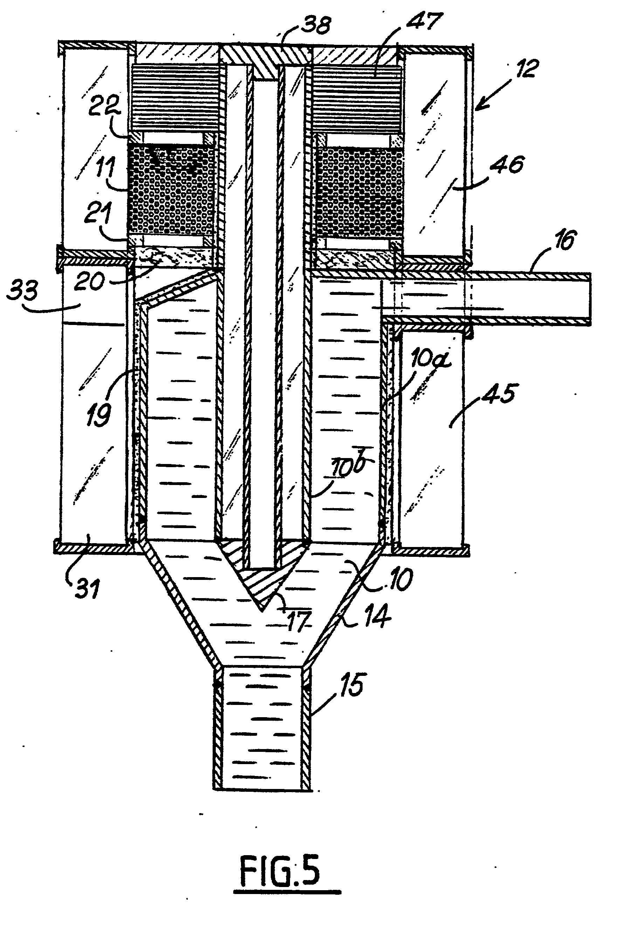

Comme il est visible sur la figure 4, les tôles magnétiques 31 et 32 sont de largeur différente et disposées dans la direction radiale de la pièce tubulaire 25, de façon à assurer un remplissage le plus complet possible du volume de cette pièce 25. La pièce 25 entoure le conduit 10 sur toute sa hauteur avec interposition de la pièce isolante thermique 19 évitant la transmission de chaleur entre le métal liquide circulant dans le conduit 10 et le circuit magnétique.

En réalité, la partie supérieure 33 de la pièce 25 est constituée par un matériau non magnétique de remplissage entourant la partie supérieure du conduit annulaire 10, dans la zone de raccordement du conduit d'arrivée de métal liquide 16. L'ensemble des structures de maintien du circuit magnétique 12 et les conduits de circulation du métal liquide sont constitués par de l'acier inoxydable.

Les branches 27 du circuit magnétique 12 sont constituées par des tôles magnétiques accolées les unes aux autres et la pièce tubulaire interne 28 est également réalisée sous forme feuilletée par juxtaposition de tôles magnétiques 34 de différentes largeur, suivant une structure comparable à celle de la pièce tubulaire 25. Les tôles magnétiques 34 sont disposées autour d'un tube central 37 en acier inoxydable en appui à sa partie inférieure sur le fond conique 17 du tube interne 10b du conduit 10.

La pièce annulaire 26 est réalisée sous forme feuilletée par empilement de disques en tôle magnétique.

Le circuit magnétique 12 est fixé à sa partie supérieure sur un flasque de fermeture 38 qui permet de démonter facilement la pompe. Sur la figure 2, la pompe a été représentée avec le flasque 38 enlevé.

La paroi de fermeture supérieure 13 du conduit 10 présente de préférence une forme tronconique, de façon a limiter le volume du conduit 10 de la pompe situé au niveau du conduit d'arrivée 16.

Lorsqu'on alimente le bobinage 11 en courant alternatif monophasé, ce courant étant représenté de façon conventionnelle par la flèche 40, un champ magnétique parcourt le circuit 12 comme représenté par les lignes en pointillés fermées et orientées 41. Les branches 27 du circuit magnétique 12 assurent la jonction entre la partie supérieure et la partie inférieure de ce circuit. Le champ magnétique traverse le conduit 10 recevant le métal liquide suivant des directions radiales ; le champ magnétique est ensuite canalisé par la pièce interne 28 joignant le conduit 10 à la pièce annulaire supérieure 26 du circuit magnétique 12.

Un courant électrique circulaire fermé sur lui-même et coaxial au conduit 10 est induit à l'intérieur du métal liquide remplissant ce conduit, comme représenté de façon conventionnelle par la flèche 42. Le sens de circulation de ce courant est opposé au sens du courant electrique 40 d'alimentation du bobinage 11 qui lui a donné naissance.

Les champs magnétiques créés par les courants 40 et 42 sont opposés, si bien qu'une force de répulsion magnétique s'exerce entre le bobinage 11 et le métal liquide ; cette force magnétique est donc dirigée vers le bas et entraîne un effet de pompage du métal liquide dans le conduit 10, ce métal étant mis en circulation suivant la direction des flèches 44. Dans le conduit annulaire 10, l'action du champ magnétique sur le courant 42 procure cet effet de pompage sur une certaine longueur du conduit, la force magnétique s'atténuant en raison de l'atténuation exponentielle du champ magnétique et du courant induit, dans la direction axiale de la pompe.

Cette atténuation dépend de la profondeur de pénétration caractéristique du metal liquide et de la fréquence d'alimentation du bobinage 11. Ces paramètres permettent de définir la longueur axiale de la pompe qui est de toute façon réduite par rapport à la longueur habituelle des pompes electromatgnétiques pour métaux liquides selon l'art antérieur.

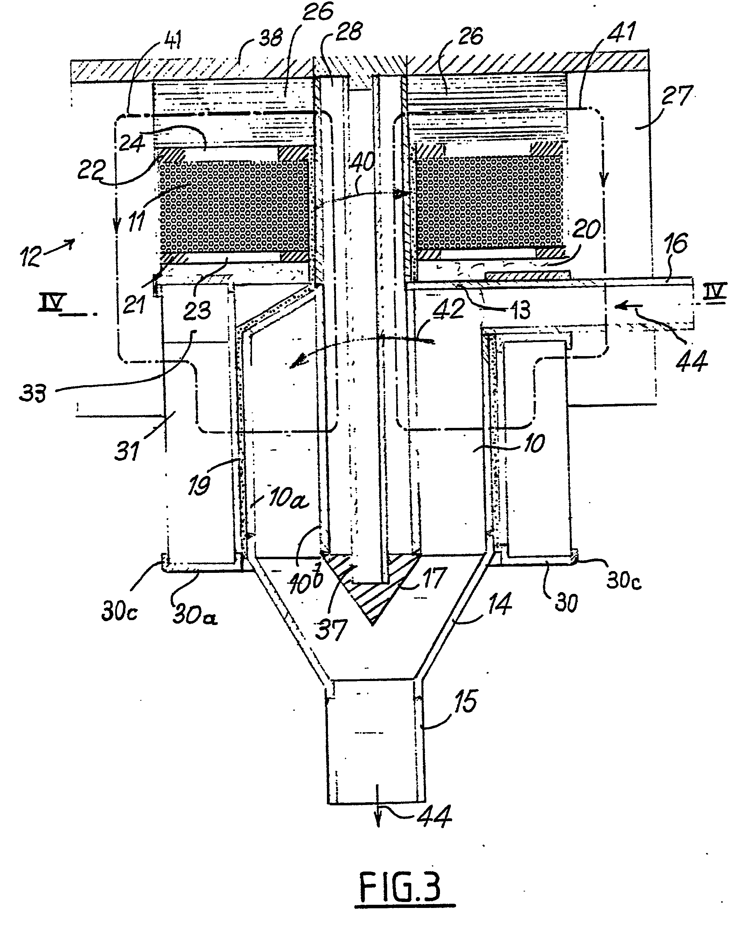

Sur la figure 5, on a représenté un second mode de réalisation de la pompe, les éléments correspondants sur les figures 3 et 5 portant les mêmes repères. Le circuit magnétique 12 est, dans ce mode de réalisation, constitué par deux parties tubulaires 45 et 46 superposées dans la direction axiale et constituées sous forme feuilletée comme la partie tubulaire 25 du circuit magnétique de la pompe représentée sur la figure 3. Le bobinage 11 est disposé à l'intérieur de la pièce tubulaire feuilletée 46 et le circuit magnétique 12 est complété par une pièce annulaire 47 et une pièce tubulaire 48 feuilletées, la pièce tubulaire 48 étant introduite dans l'alésage interne de la pièce annulaire 47 et de la bobine 11 et logée à sa partie inférieure dans le tube intérieur du conduit 10 de la pompe. Le circuit magnétique de la pompe représentée sur la figure 5 ne comporte donc pas de branche saillante 27 et sa forme générale externe est cylindrique.

Le bobinage 11 est, comme précédemment, alimenté en courant monophasé et le fonctionnement de la pompe est tout-à-fait identique à celui de la pompe représentée sur la figure 3.

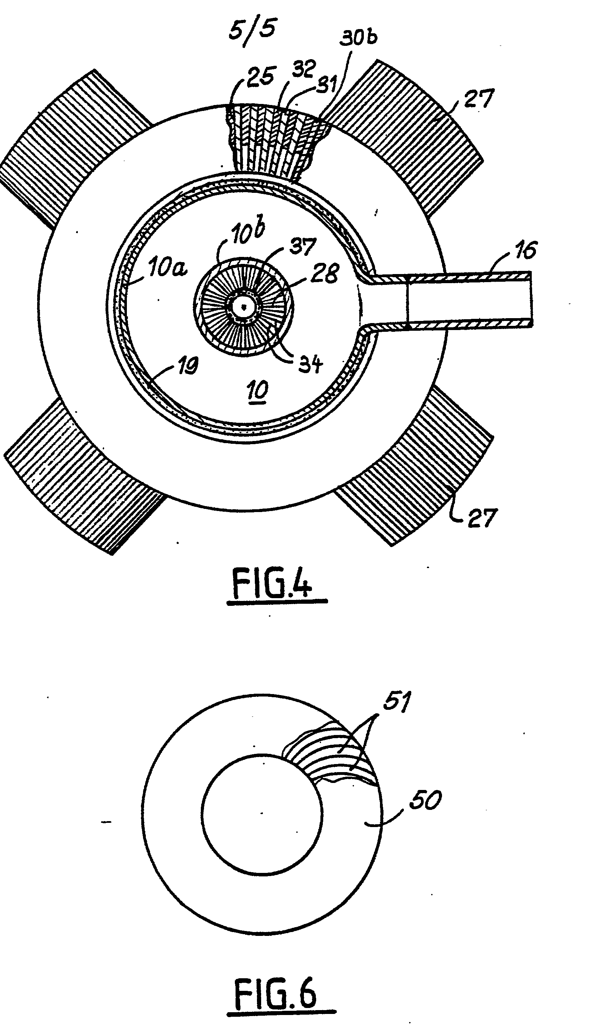

Sur la figure 6, on voit une variante de réalisation des pièces tubulaires du circuit magnétique (par exemple les pièces 25 et 28 du mode de réalisation de la figure 3 ou les pièces 45, 46 et 48 du mode de réalisation de la figure 5.

Les tôles 51 de la pièce magnétique tubulaire feuilletée 50 sont formées à partir de tôles magnétiques d'épaisseur et de largeur constantes, galbées selon une forme en développante de cercle. Leur extrémité extérieure peut être biseauté de manière à former un cercle continu.

De cette façon, on peut réaliser un empilement totalement compact, avec un jeu de tôles magnétiques ayant toutes la même forme et la même dimension, pour la constitution d'une pièce magnétique feuilletée de forme tubulaire ou annulaire.

On voit que les principaux avantages de la pompe électromagnétique suivant l'invention sont une grande simplicité de structure, un coût modéré et un encombrement réduit.

En particulier, le circuit magnétique est relativement simple et ne comporte qu'une encoche pour laisser le passage au conduit d'arrivée de métal liquide dans le conduit interne de la pompe.

La pompe selon l'invention présente de plus l'avantage d'être facilement démontable dans ses parties susceptibles de se détériorer et de ne comporter qu'un enroulement qui peut être facilement remplacé, s'il devient défectueux. De plus, cet enroulement unique est alimenté en courant monophasé, si bien que le branchement de la pompe est particulièrement simple à réaliser.

L'invention ne se limite pas aux modes de réalisation. C'est ainsi qu'on peut imaginer d'autres formes pour le conduit et le circuit magnétique, à partir du moment où le conduit est entouré extérieurement et intérieurement par le circuit magnétique pour permettre la circulation du champ dans des directions radiales à travers le métal liquide.

Les tôles magnétiques constituant les différentes pièces du circuit magnétique peuvent être en tout matériau présentant les caractéristiques voulues. Cependant, dans le cas où la pompe est destinée à un circuit de métal liquide, il est préférable de réaliser ces pièces en acier magnétique au cobalt gardant leurs propriétés à haute température.

On peut prévoir autour du bobinage 11 de la pompe, comme indiqué ci-dessus, une circulation d'air ou d'un autre gaz de refroidissement grâce à des moyens de ventilation additionnels associés à la pompe. On peut également prévoir une circulation de fluide de refroidissement en contact avec le circuit magnétique et en particulier entre les branches saillantes de liaison de ce circuit, lorsqu'il comprend de telles branches.

La pompe électromagnétique suivant l'invention peut être utilisée non seulement pour le pompage de métaux liquides tels que le sodium, le lithium, l'étain, le plomb, le mercure, ... mais encore pour le pompage de tout liquide électriquement conducteur, à haute température, à basse température ou à la température ambiante.

Enfin, les parties en contact avec le métal liquide, ou le liquide conducteur électrique, peuvent être en matériau amagnétique autre que l'acier inoxydable, tels que le titane ou des céramiques. Ce matériau doit être compatible avec le liquide conducteur soumis au pompage, c'est-à-dire qu'il doit résister à l'attaque chimique ou thermique par le liquide, sur tout le domaine des températures utilisées.

**Revendications**

1.- Pompe électromagnétique pour liquide conducteur, à refoulement par répulsion magnétique comportant un conduit annulaire (10) recevant le liquide conducteur ainsi qu'un bobinage (11) et un circuit magnétique (12) permettant de créér un champ magnétique et un courant électrique dans le liquide conducteur, caractérisée par le fait :

- que le conduit annulaire (10) est fermé à l'une de ses extrémités et communique, au voisinage de cette extrémité, avec un conduit latéral (16) d'arrivée de liquide conducteur; l'autre extrémité du conduit annulaire (10) est ouverte et communique avec un conduit de sortie.

- que le bobinage (11) comporte un seul enroulement coaxial au conduit annulaire (10) adjacent à son extrémité fermée et alimenté en courant alternatif monophasé,

- et que le circuit magnétique (12) entoure extérieurement et intérieurement, à la fois le bobinage (11) et le conduit annulaire (10).

2.- Pompe électromagnétique suivant la revendication 1, caractérisée par le fait que le circuit magnétique 12 comporte une pièce tubulaire feuilletée (25) entourant extérieurement le conduit annulaire (10), une pièce tubulaire feuilletée (28) disposée à l'intérieur du conduit annulaire (10) et traversant l'alésage interne du bobinage (11) et l'alésage interne d'une pièce annulaire feuilletée (26) du circuit magnétique (12) qui comporte de plus des branches saillantes (27) joignant la partie périphérique de la pièce annulaire (26) à la partie périphérique de la pièce tubulaire (25) entourant le conduit (10).

3.- Pompe électromagnétique suivant la revendication 1, caractérisée par le fait que le circuit magnétique (12) est constitué par au moins une pièce magnétique feuilletée de forme tubulaire (45, 46) entourant extérieurement le conduit (10) et le bobinage (11), une pièce annulaire feuilletée (47) et une pièce tubulaire feuilletée (48) disposée à la partie interne du conduit (10) et traversant l'alésage interne du bobinage (11) et l'alésage interne de la pièce annulaire feuilletée (47) du circuit magnétique (12), placée à l'intérieur de la pièce tubulaire feuilletée (45, 46).

4.- Pompe électromagnétique suivant l'une quelconque des revendications 1, 2 et 3, caractérisée par le fait que le bobinage (11) vient en appui, par une de ses faces planes d'extrémité, sur l'extrémité fermée (13) du conduit (10).

5.- Pompe électromagnétique suivant l'une quelconque des revendications 1 à 4, caractérisée par le fait que l'extrémité fermée du conduit (10) a une forme tronconique.

6.- Pompe électromagnétique suivant l'une quelconque des revendications 1, 2 et 3, caractérisée par le fait que les pièces magnétiques feuilletées (25, 28, 45, 46, 48) constituant le circuit magnétique (12) sont formées à partir de tôles magnétiques d'épaisseur et de largeur constante, galbées suivant une forme de développante de cercle.

7.- Pompe électromagnétique suivant l'une quelconque des revendications 1, 2, 3 et 6, caractérisée par le fait que le circuit magnétique (12) est réalisé à partir de tôles en acier magnétique au cobalt.

8.- Pompe électromagnétique suivant l'une quelconque des revendications 1 à 7, caractérisée par le fait que le conduit (10) est relié à son extrémité non fermée à un conduit de sortie (15), par l'intermédiaire d'une partie tronconique (16).

9.- Pompe électromagnétique suivant l'une quelconque des revendications 1 à 8, caractérisée par le fait qu'elle comporte des moyens pour la mise en circulation d'un fluide de refroidissement gazeux en contact avec le bobinage (11) et/ou avec le circuit magnétique (12).

10.- Pompe électromagnétique selon l'une quelconque des revendications 1 à 9, dans le cas où le liquide conducteur est un métal liquide, caractérisée par le fait que le conduit (10) est entouré extérieurement par des pièces isolantes thermiques (19, 20) situées respectivement entre le conduit annulaire (10) et le circuit magnétique (12) et entre l'extrémité fermée (13) du conduit annulaire (10) et le bobinage (11).

11.- Pompe électromagnétique suivant l'une quelconque des revendications 1 à 9, caractérisé par le fait que les pièces (10, 14, 15, 16) en contact avec le métal liquide ou autre liquide conducteur sont en un matériau amagnétique compatible avec le produit pompé sur tout le domaine des températures utilisées.

**Claims**

1. Electromagnetic pump for conductive liquid with backflow by means of magnetic repulsion, comprising an annular duct (10) which receives the conductive liquid, coil means (11) and a magnetic circuit (12) for creating a magnetic field and an electric current in the conductive liquid, characterised in that:
  - the annular duct (10) is closed at one end and communicates, in the vicinity of this end, with a lateral intake duct (16) for the conductive liquid, the other end of the annular duct (10) being open and communicating with an outlet duct,
  - the coil means (11) comprises a single winding which is coaxial with the annular duct (10) adjacent to the closed end thereof and supplied with single-phase alternating current,
  - and the magnetic circuit (12) surrounds both the coil means (11) and the annular duct (10), on the inside and outside.

2. Electromagnetic pump according to claim 1, characterised in that the magnetic circuit (12) comprises a laminar tubular member (25) externally surrounding the annular duct (10), a laminar tubular member (28) disposed inside the annular duct (10) and passing through the internal bore of the coil means (11) and the internal bore of a laminar annular member (26) of the magnetic circuit (12) which further comprises projecting branches (27) connecting the peripheral portion of the annular member (26) to the peripheral portion of the tubular member (25) surrounding the duct (10).

3. Electromagnetic pump according to claim 1, characterised in that the magnetic circuit (12) consists of at least one laminar magnetic member of tubular shape (45, 46) externally surrounding the duct (10) and the coil means (11), a laminar annular member (47) and a laminar tubular member (48) disposed on the inside of the duct (10) and passing through the internal bore of the coil means (11) and the internal bore of the laminar annular member (47) of the magnetic circuit (12), located within the laminar tubular member (45, 46).

4. Electromagnetic pump according to any one of claims 1, 2 and 3, characterised in that the coil means (11) abut, with one of the planar end faces thereof, on the closed end (13) of the duct (10).

5. Electromagnetic pump according to any one of claims 1 to 4, characterised in that the closed end of the duct (10) is frustoconical-shaped.

6. Electromagnetic pump according to any one of claims 1, 2 and 3, characterised in that the laminar magnetic members (25, 28, 45, 46, 48) which constitute the magnetic circuit (12) are formed from magnetic sheet metal of constant thickness and width which are shaped to form involutes of a circle.

7. Electromagnetic pump according to any one of claims 1, 2, 3 and 6, characterised in that the magnetic circuit (12) is formed from sheets of magnetic cobalt steel.

8. Electromagnetic pump according to any one of claims 1 to 7, characerised in that the duct (10) is connected, at its unclosed end, to an outlet duct (15) via a frustoconical-shaped portion (16).

9. Electromagnetic pump according to any one of claims 1 to 8, characterised in that it comprises means for circulating a gaseous cooling fluid in contact with the coil means (11) and/or with the magnetic circuit (12).

10. Electromagnetic pump according to any one of claims 1 to 9, where the conductive liquid is a liquid metal, characterised in that the duct (10) is surrounded on the outside by heat insulating members (19, 20) located respectively between the annular duct (10) and the magnetic circuit (12) and between the closed end (13) of the annular duct (10) and the coil means (11).

11. Electromagnetic pump according to any one of claims 1 to 9, characterised in that the parts (10, 14, 15, 16) in contact with the liquid metal or other conductive liquid are made of a non-magnetic material compatible with the product being pumped over the entire range of temperatures being used.

## Patentansprüche

1. Elektromagnetische Pumpe für leitende Flüssigkeit mit Zurückdrängung durch magnetische Abstoßung, mit einem die leitende Flüssigkeit aufnehmenden ringförmigen Leitungsrohr (10) sowie mit einer Wicklungsanordnung (11) und einem Magnetkreis (12), die die Erzeugung eines magnetischen Feldes und eines elektrischen Stromes in der leitenden Flüssigkeit erlauben, dadurch gekennzeichnet, daß

– das ringförmige Leitungsrohr (10) an einem seiner Enden verschlossen ist und in der Nähe dieses Endes mit einem seitlichen Leitungsrohr (16) für den Zulauf der leitenden Flüssigkeit in Verbindung steht, während das andere Ende des ringförmigen Leitunsrohres (10) offen ist und mit einem Ablaufleitungsrohr in Verbindung steht;
– die Wicklungsanordnung (11) eine einzige zum ringförmigen Leitungsrohr (10) koaxiale Wicklung aufweist, die in der Nähe des verschlossenen Endes des ringförmigen Leitungsrohres (10) angeordnet ist und mit einem einphasigen Wechselstrom gespeist wird; und
– der Magnetkreis (12) gleichzeitig die Wicklungsanordnung (11) und das ringförmige Leitungsrohr (10) sowohl an deren Außenseite als auch an deren Innenseite umgibt.

2. Elektromagnetische Pumpe gemäß Anspruch 1, dadurch gekennzeichnet, daß der Magnetkreis (12) ein röhrenförmiges, geblechtes Teil (25), das das ringförmige Leitungsrohr (10) an dessen Außenseite umgibt, und ein geblechtes, röhrenförmiges Teil (28), das innerhalb des ringförmigen Leitungsrohres (10) angeordnet ist und sowohl die Innenöffnung der Wicklungsanordnung (11) als auch die Innenöffnung eines ringförmigen, geblechten Teils (26) des Magnetkreises (12) durchsetzt, aufweist, wobei der Magnetkreis (12) eine Mehrzahl von vorstehenden Zweigen (27) aufweist, die den Umfangsteil des ringförmigen Teils (26) mit dem Umfangsteil des das Leitungsrohr (10) umgebenden röhrenförmigen Teil (25) verbinden.

3. Elektromagnetische Pumpe gemäß Anspruch 1, dadurch gekennzeichnet, daß der Magnetkreis von wenigstens einem geblechten magnetischen Teil von röhrenförmiger Gestalt (45, 46), das das Leitungsrohr (10) und die Wicklungsanordnung (11) an deren Außenseite umgibt, von einem ringförmigen, geblechten Teil (47) und von einem röhrenförmigen, geblechten Teil (48), das im Inneren des Leitungsrohres (10) angeordnet ist und sowohl die Innenöffnung der Wicklungsanordnung (11) als auch die Innenöffnung des im Inneren des röhrenförmigen, geblechten Teils (45, 46) angeordneten ringförmigen, geblechten Teils (47) durchsetzt, gebildet wird.

4. Elektromagnetische Pumpe gemäß einem der Ansprüche 1, 2 und 3, dadurch gekennzeichnet, daß die Wicklungsanordnung (11) mit einer ihrer ebenen Stirnseiten im verschlossenen Ende (13) des Leitungsrohres (10) aufliegt.

5. Elektromagnetische Pumpe gemäß einem der Ansprüche 1 bis 4, dadurch gekennzeichnet, daß das verschlossene Ende des Leitungsrohres (10) eine kegelstumpfartige Gestalt besitzt.

6. Elektromagnetische Pumpe gemäß einem der Ansprüche 1, 2 und 3, dadurch gekennzeichnet, daß die magnetischen, geblechten Teile (25, 28, 45, 46, 48), die den Magnetkreis (12) bilden, aus magnetischen Blechen konstanter Stärke und Breite hergestellt und gemäß der Form einer Kreisevolvente geformt sind.

7. Elektromagnetische Pumpe gemäß einem der Ansprüche 1, 2, 3 und 6, dadurch gekennzeichnet, daß der Magnetkreis (12) aus Blechen aus magnetischen Kobaltstahl hergestellt ist.

8. Elektromagnetische Pumpe gemäß einem der Ansprüche 1 bis 7, dadurch gekennzeichnet, daß das Leitungsrohr (10) mit seinem nicht verschlossenen Ende über ein dazwischenliegendes kegelstumpfförmiges Teil (16) mit einem Ablaufleitungsrohr (15) in Verbindung steht.

9. Elektromagnetische Pumpe gemäß einem der Ansprüche 1 bis 8, dadurch gekennzeichnet, daß Einrichtungen vorgesehen sind, um ein gashaltiges, flüssiges Kühlmittel, das mit der Wicklungsanordnung (11) und/oder dem Magnetkreis (12) in Kontakt ist, in Zirkulation zu versetzen.

10. Elekromagnetische Pumpe gemäß einem der Ansprüche 1 bis 9, dadurch gekennzeichnet, daß das Leitungsrohr (10) an seiner Außenseite von wärmeisolierenden Teilen (19, 20) umgeben ist, die zwischen dem ringförmigen Leitungsrohr (10) und dem Magnetkreis (12) bzw. zwischen dem verschlossenen Ende (13) des ringförmigen Leitungsrohres (10) und der Wicklungsanordnung (11) angeordnet sind, falls die leitende Flüssigkeit ein flüssiges Metall ist.

11. Elekrtomagnetische Pumpe gemäß einem der Ansprüche 1 bis 9, dadurch gekennzeichnet, daß die im Kontakt mit dem flüssigen Metall oder anderen flüssigen Leitern sich befindenden Teile (10, 14, 15, 16) aus einem nichtmagnetischen Material bestehen, das mit dem gepumpten Produkt innerhalb des ganzen verwendeten Temperaturbereiches verträglich ist.

FIG.1

EP 0 232 661 B1

FIG.2

EP 0 232 661 B1

FIG.3

FIG.5

5/5

FIG.4

FIG.6